# FASCICULE DE BREVET EUROPEEN

(11) **EP 1 698 513 B1**
(45) Date de publication et mention de la délivrance du brevet: **24.10.2007**
(21) Numéro de dépôt: 06290368.7
(22) Date de dépôt: 03.03.2006
(51) Int. Cl.: B60P 1/28, B65D 90/00

(54) **Benne amovible à échelles intégrées pour le stockage et le transport de matériaux**
Wechselbehälter mit eingebautem Leiter zur Aufnahme und zum Transport von Materialien
Exchangeable container, with integrated ladder, for storing and transporting material

(30) Priorité: 04.03.2005 FR 0502225
(43) Date de publication de la demande: 06.09.2006
(73) Titulaire: Moreau, Christian, 86220 Dange Saint Romain (FR)
(72) Inventeur: Moreau, Christian, 86220 Dange Saint Romain (FR)
(74) Mandataire: Laget, Jean-Loup

(56) Documents cités:
- EP-A- 0 438 361
- DE-C1- 19 922 512
- DE-U1- 9 203 198
- DE-U1- 20 218 845
- FR-A- 2 485 492
- GB-A- 1 315 073
- US-A- 1 617 809
- US-A- 1 714 451
- US-A- 3 971 456
- US-A1- 2002 053 814

## Description

La présente invention concerne une benne, de préférence amovible, pour le stockage et le transport de matériel et/ou de matériaux, du type comprenant une caisse délimitée au moyen de parois latérales et d'un fond, cette caisse étant fermée à une extrémité par une paroi frontale avant.

De nombreuses bennes répondent à cette définition, comme l'illustre en particulier le brevet FR-A-2 710 591. Jusqu'à présent, de telles bennes comportent des renforts verticaux et/ou longitudinaux disposés à l'extérieur de la caisse délimitée au moyen des parois latérales et du fond. La disposition de ces éléments de renfort à l'extérieur de la caisse de la benne engendre un certain nombre d'inconvénients. Tout d'abord, cette disposition réduit le volume utile de la benne. En effet, les bennes doivent, pour répondre aux exigences imposées par le code de la route, présenter une largeur n'excédant pas 2 550 mm (hors dispositifs pour fixer une bâche ainsi que leur protection). Lorsque les éléments de renfort sont positionnés à l'extérieur de la caisse, la largeur utile de la caisse correspond à la largeur maximale de la caisse moins l'épaisseur de la tôle et l'épaisseur des éléments de renfort. Il en résulte une perte de volume de l'ordre de 10 %. Par ailleurs, du fait de la présence des éléments de renfort à l'extérieur de la benne, les parois latérales de la benne sont des parois non lisses. De ce fait, ces parois sont difficiles à entretenir et la couche de finition appliquée sur ces parois nécessite un temps de pose important. En effet, dans les coins, angles ou recoins ménagés du fait de la présence des éléments de renfort, la couche de peinture est généralement en surépaisseur et de ce fait tend à s'écailler plus rapidement en raison de ces amalgames. Il en résulte une maintenance importante de telles bennes. Enfin, lorsque la tôle, servant à la délimitation de la caisse, est abîmée, le remplacement de cette tôle est rendu difficile en raison de la présence de ces éléments de renfort extérieurs.

Une benne amovible dont la conception permet d'accroître la largeur utile de la benne, de faciliter l'entretien et le remplacement de ses faces extérieures, qui peuvent être utilisées à titre notamment de surface d'affichage, a été décrite dans la demande FR 2 871 419 du même demandeur.

Les parois latérales de ladite benne présentent des renforts s'étendant dans le sens longitudinal et/ou transversal des parois de la benne, ces renforts étant profilés pour être solidarisés aux faces intérieures des parois de la benne de manière à former des caissons de raidissage laissant totalement libres les faces externes des parois latérales aptes à constituer, notamment, des surfaces d'affichage.

Grâce au positionnement des renforts à l'intérieur de la benne sous forme d'éléments rapportés, les faces externes des parois latérales restent libres et lisses et peuvent ainsi constituer notamment des surfaces d'affichage. En outre, la disposition des éléments de renfort à l'intérieur de la benne d'allure générale parallélépipédique permet d'augmenter la largeur utile de cette benne et par suite le volume utile de ladite benne.

Cependant, une telle benne présente néanmoins un certain nombre d'inconvénients concernant l'aménagement et/ou la mise en place d'accessoires utiles à sa manutention et à son utilisation par le personnel, aménagement et/ou accessoires qui viennent généralement s'adapter à l'extérieur des faces externes de la benne, et augmentent la largeur totale maximale qui excède alors la largeur autorisée actuellement par le code de la route.

Un premier aménagement important est l'utilisation d'une échelle. Le personnel chargé du transport de ces bennes doit, avant de les déplacer, recouvrir leur partie supérieure d'un filet de protection, ou d'une couverture amovible afin d'empêcher la chute ou l'envol, hors de la benne, de matériaux contenus dans cette dernière.
La hauteur des bennes excédant généralement 2 mètres, le personnel a donc besoin d'une échelle pour mettre en place et fixer le filet ou la couverture amovible en partie supérieure de la benne.
Si cette échelle est portative, ils doivent la déplacer de nombreuses fois autour de la benne, pour accéder aux différents points d'accroche du filet, avec de nombreux risques de glissement latéral du haut de l'échelle, appuyé sur les parois lisses de la benne.
Il est également possible de fixer des échelles formées de montants verticaux, reliés entre eux par des barreaux horizontaux, et solidarisés aux parois latérales externes de la benne. Dans ce cas, l'échelle se trouve en saillie des parois et augmente ainsi sa largeur, dépassant alors la valeur maximale admise par le code de la route.

Il a également été proposé, dans le brevet US 3 971 456 des modules constitués d'une cavité en forme de demi-cylindre dans l'axe duquel est disposée une barre horizontale. Ces modules s'adaptent à une succession d'ouvertures découpées dans les parois de structures (camion, avion...) qu'ils viennent ainsi obturer, et constituent les degrés d'une échelle. La fixation de ces modules nécessite cependant le boulonnage d'une collerette, ou une soudure périphérique.

Un premier but de l'invention est donc de proposer une benne comportant une échelle ne présentant pas les inconvénients précités, et notamment qui ne fasse pas saillie au-delà des faces extérieures des parois latérales de ladite benne, tout en simplifiant sa fabrication.

Un deuxième aménagement indispensable concerne, outre le système de fermeture, la présence d'un système de verrouillage de sécurité des portes arrière de la benne. De manière classique, il se compose d'un dispositif de fermeture par crémone associé à un loqueteau, et d'un dispositif de verrouillage des portes comprenant des crochets de blocage des portes, actionnables au moyen d'une poignée, disposée du côté longitudinal de la benne, en saillie de la paroi latérale.
Cependant, le personnel doit venir à l'arrière de la benne pour entraîner en déplacement la crémone. Des accidents fréquents surviennent lorsque l'utilisateur actionne la crémone alors que les crochets de blocage ne sont pas en position de verrouillage. Si la benne est pleine, le chargement risque de se déverser sur l'opérateur.

Si les crochets de blocage sont en place, après être passé derrière la benne pour déplacer la crémone, l'opérateur doit remonter dans sa cabine, reculer son véhicule à l'endroit où il veut vider son chargement, puis redescendre du camion, pour aller déverrouiller lesdits crochets, et enfin remonter dans la cabine du véhicule pour actionner le vidage de la benne.

Un autre but de l'invention est donc de proposer une benne comportant un système simple de fermeture et de verrouillage des portes qui pallie les inconvénients précités, tout en facilitant les opérations de vidage de la benne, et qui ne fasse pas saillie au-delà des faces extérieures des parois latérales de ladite benne tout en libérant les surfaces des portes arrière.

Un troisième aménagement concerne les jambages de l'anneau de préhension de la benne en face avant. Une benne amovible est souvent utilisée comme réceptacle pour des matériaux, généralement posé sur le sol. Ce réceptacle est destiné à être chargé sur un camion en vue de son transport. A cet effet, la benne possède, sur sa face avant, un anneau de préhension, associé à des renforts appelés jambages s'étendant vers le bas jusqu'aux traverses inférieures longitudinales disposées sous la caisse de la benne.

Le problème réside dans le fait que ces jambages dépassent du plan formé par la face avant de la benne, qui n'est donc pas lisse, et ne permet pas un affichage sur cette surface.

Un autre aménagement nécessaire est relatif à un dispositif de maintien des portes arrière de la benne en position ouverte.
En effet, lors du déchargement de la benne par exemple, les portes se replient contre la face extérieure des parois latérales de la benne et doivent être maintenues en place dans cette position pendant toute l'opération. Les dispositifs de maintien des bennes classiques sont logés sur ou entre les renforts extérieurs des parois latérales.
Dans le cas présent, il est hors de question de placer sur les bennes selon l'invention, des crochets de retenue faisant saillie en surface extérieure des parois latérales qui doivent rester libres, plates et lisses.

La présente invention a donc pour but de pallier les inconvénients précités et de proposer des aménagements et/ou accessoires s'adaptant au type de benne telle que décrite dans la demande FR 2 871 419, qui permettent de conserver ses parois extérieures libres, planes et lisses. Un autre example de cette technique antérieur est divulgué par le document FR 2 485 492.

A cet effet, la présente invention concerne une benne, de préférence amovible, pour le stockage et le transport de matériel et/ou de matériaux, du type comprenant une caisse délimitée par des parois latérales et un fond, et fermée à une extrémité par une paroi frontale avant, les parois latérales de la benne présentant des renforts s'étendant dans le sens longitudinal et/ou transversal des parois de la benne, ces renforts étant profilés pour être solidarisés aux faces intérieures des parois de la benne de manière à former des caissons de raidissage laissant totalement libres les faces externes des parois latérales aptes à constituer, notamment, des surfaces d'affichage, caractérisée en ce qu'au moins une échelle est ménagée dans le plan, ou en retrait du plan extérieur d'au moins une paroi de la benne, ladite échelle étant formée d'une succession d'ouvertures alignées verticalement, de préférence régulièrement espacées et ménagées dans au moins une paroi de la benne, en vis-à-vis d'une ou plusieurs zones en creux d'un renfort vertical profilé solidarisé à la face intérieure de ladite paroi.

Grâce au positionnement des renforts à l'intérieur de la benne sous forme d'éléments rapportés et au positionnement de l'échelle dans le plan ou en retrait des faces externes des parois latérales, ces dernières restent libres et lisses et peuvent ainsi constituer notamment des surfaces d'affichage. En outre, la disposition des éléments de renfort à l'intérieur de la benne d'allure générale parallélépipédique permet d'augmenter la largeur utile de cette benne et par suite le volume utile de ladite benne.
De plus, l'utilisateur de la benne dispose de degrés intégrés notamment pour accéder à la partie supérieure de la benne et donc par exemple, mettre en place, par exemple les filets de protection du chargement de ladite benne.

De manière avantageuse, le renfort est un profilé creux ouvert, à section présentant la forme approximative d'un C ou d'un U dont les extrémités des branches sont solidarisées à la face intérieure de la paroi.
Grâce à cette configuration du profilé, on empêche tout déversement du contenu de la benne au travers desdites ouvertures.
En outre, on utilise la présence de ces profilés préexistants en tant que renforts, par exemple dans la zone centrale d'une paroi ou dans les angles de la benne, pour simplifier l'échelle.

Ces profilés permettent également le passage d'éléments de liaison, tels que câbles, organes de manoeuvre, etc..., facilement accessibles de l'extérieur au travers des ouvertures.

L'invention sera mieux comprise à la lecture de la description suivante d'exemples de réalisation des différents aménagements d'une benne amovible, en référence aux dessins annexés, dans lesquels :
la figure 1 représente une vue de dessus en perspective d'une benne conforme à l'invention,
la figure 2 représente une vue de face d'une paroi latérale de la benne conforme à l'invention,
la figure 2a représente une vue agrandie d'un détail de la figure 2,
les figures 3a et 3b représentent deux modes de réalisation des degrés de l'échelle intégrée de la benne conforme à l'invention,
la figure 4 représente une vue latérale d'une première variante du dispositif de fermeture et de verrouillage des portes de la benne,
la figure 5 représente une vue de dessus d'une première variante du dispositif de fermeture et de verrouillage de la figure 4,
les figures 6a et 6b représentent des vues arrière de la poignée de la crémone respectivement verrouillée et déverrouillée, selon la première variante du dispositif de fermeture et de verrouillage,
la figure 7 montre un détail de la lumière avec encoche du dispositif de verrouillage selon la première variante,
les figures 8a et 8b représentent des vues de dessous du dispositif de fermeture et de verrouillage des figures 4 et 5 dans les positions respectivement verrouillée et déverrouillée,
la figure 9 montre l'emplacement du dispositif de fermeture et de verrouillage des figures 8a et 8b sous la benne,
la figure 9a est une vue agrandie d'un détail de la figure 9,
la figure 10 représente une vue de dessous en perspective du moyen d'accrochage des portes arrière,
la figure 11 représente la face avant de la benne selon l'invention sans jambages et
la figure 12 représente une benne selon l'invention, placée sur un véhicule, en position de vidage,
la figure 13 représente une vue schématique d'une deuxième variante du dispositif de fermeture et de verrouillage des portes de la benne,
la figure 14 représente un détail de la figure 1 montrant le dispositif de fermeture et de verrouillage de la figure 13.

Comme mentionné ci-dessus, la benne 1, objet de l'invention, est destinée au transport et/ou au stockage de matériel et/ou de matériaux. Cette benne peut être positionnée de manière amovible sur le châssis d'un véhicule de transport ou bien être fixée de manière permanente sur le châssis du véhicule. Cette benne peut encore reposer en appui au sol et constituer une benne de stockage de matériaux ou, recouverte en partie supérieure, servir de coffre pour entreposer du matériel, par exemple sur un chantier.
Indépendamment de sa destination, cette benne d'allure générale parallélépipédique est formée d'une caisse délimitée au moyen au moins de parois 2 latérales et d'un fond 3. Les parois 2 latérales et le fond 3 sont réalisés à partir de panneaux ou feuilles de tôle généralement mécano-soudés entre eux pour constituer lesdites parois. Les parois 2 latérales et le fond 3 délimitent ainsi une caisse d'allure générale parallélépipédique fermée à une extrémité par une paroi 4 frontale avant et à son autre extrémité par des portes arrière 5.
La benne 1 selon l'invention est généralement ouverte en partie supérieure, mais peut, si nécessaire, être équipée d'une paroi supérieure.

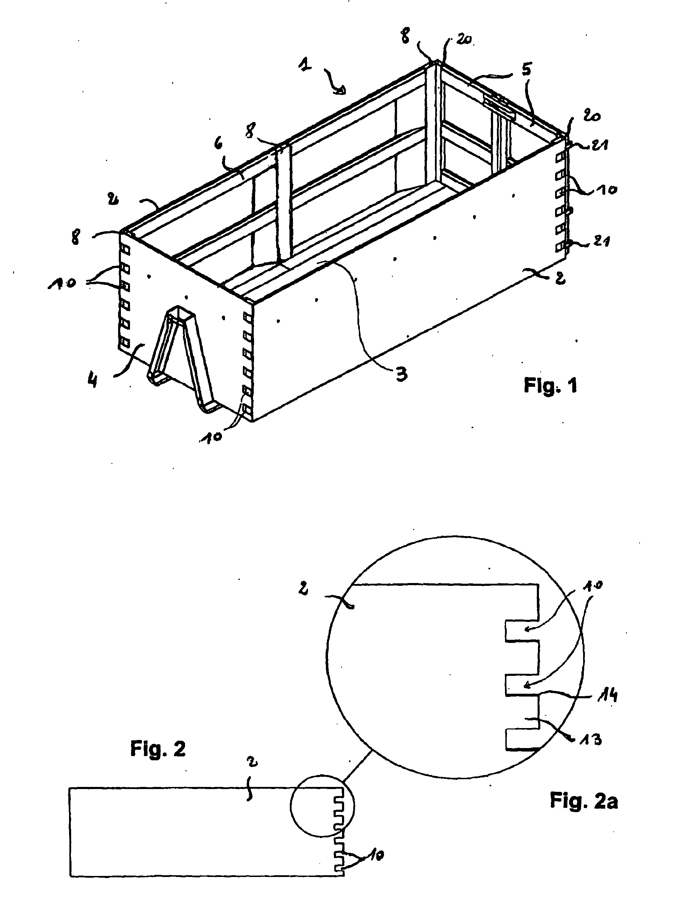

De manière caractéristique à l'invention, et comme visible sur la figure 1, les parois 2 latérales de la benne présentent des renforts 6, 8 s'étendant dans le sens longitudinal et/ou transversal des parois 2 de la benne. Ces renforts 6, 8 sont profilés pour être solidarisés aux faces intérieures des parois 2 de la benne pour former des caissons de raidissage laissant totalement libres les faces externes des parois latérales. Ces faces externes sont ainsi aptes à constituer, notamment, des surfaces d'affichage. Elles peuvent être revêtues d'une peinture de finition ou d'un film adhésif, par exemple de type vinyl. Du fait de la planéité de ces parois extérieures, leur entretien est facilité de même que leur remplacement en cas d'usure prématurée.
La forme des renforts longitudinaux 6 ou transversaux 8 peut être telle que décrite dans la demande de brevet FR 2 871 419, notamment avec des faces du dessus inclinées déclives en direction de l'intérieur de la benne ou des faces chanfreinées, de manière à faciliter l'écoulement des matières, notamment lors du déchargement de la benne 1.
Afin de pouvoir accéder à la partie supérieure de la benne 1 et y adapter par exemple un filet de protection ou une bâche, ou une couverture amovible, il est prévu une échelle formée d'une succession d'ouvertures 10 alignées verticalement, de préférence régulièrement espacées. Ces ouvertures 10 sont ménagées dans au moins une paroi de la benne 1, en vis-à-vis d'une ou plusieurs zones 11 en creux d'un renfort transversal, ici vertical 8 profilé solidarisé à la face intérieure de ladite paroi. Ainsi cette succession d'ouvertures 10 forme une échelle ménagée dans le plan ou en retrait du plan extérieur de cette paroi, et donc "intégrée" à la benne 1. Cette échelle étant intégrée à ladite benne 1, elle ne peut être oubliée ni perdue, ni déformée ; les risques de glissement le long des parois sont en outre totalement supprimés.

De manière avantageuse, le renfort vertical 8 est un profilé creux, ouvert le long de l'une de ses génératrices, l'ouverture du profilé étant tournée vers la paroi de la benne 1. La section de ce profilé présente la forme approximative d'un C ou d'un U dont les extrémités des branches sont solidarisées à la face intérieure de la paroi de la benne 1.

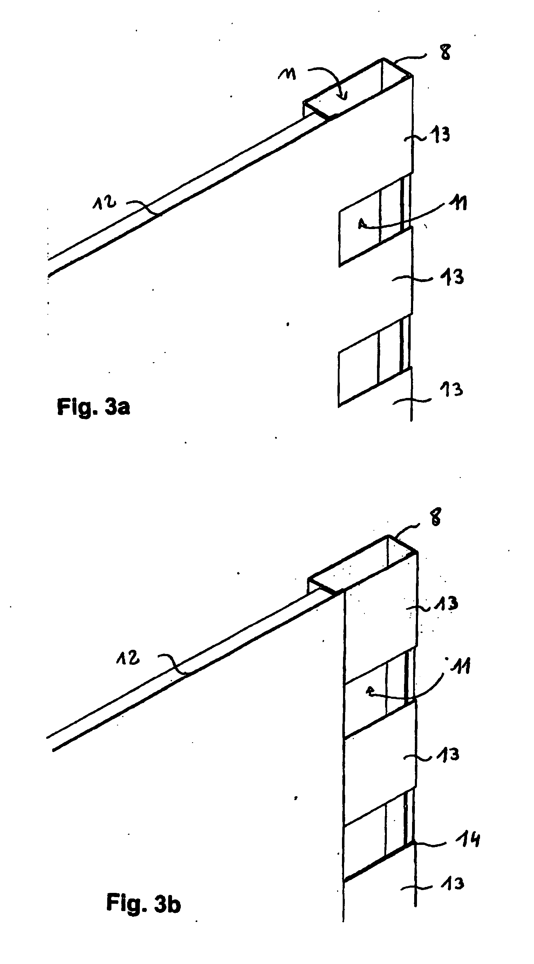

Selon un premier mode de réalisation de l'échelle intégrée selon l'invention, représenté à la figure 3a, le panneau ou feuille de tôle 12 constituant la paroi latérale 2 ou la face avant 4 de la benne est découpé au niveau d'au moins une de ses extrémités latérales, verticalement de manière crénelée, en formant une succession d'ouvertures 10, séparées par des éléments horizontaux 13 constituant les degrés de ladite échelle. Les ouvertures 10 sont situées en vis-à-vis de la ou les partie(s) creuse(s) 11 correspondante(s) du montant vertical 8, soudé sur la face arrière du panneau ou feuille de tôle 12.

Selon un second mode de réalisation de l'échelle intégrée selon l'invention, représenté à la figure 3b, les éléments horizontaux 13, de préférence, régulièrement espacés, sont fixés à l'extrémité latérale du panneau ou feuille de tôle 12, dans le plan de celle-ci (ou en retrait de ce plan), de manière à constituer les degrés de ladite échelle. Dans ce mode de réalisation, le montant vertical 8 profilé présente également une section en forme approximative d'un C, dont une des branches est solidarisée à la lisière interne du panneau 12, et l'autre branche est solidarisée aux terminaisons des éléments horizontaux 13. Ainsi, le montant profilé 8 dépasse de plusieurs centimètres du panneau 12 et permet ainsi d'augmenter la longueur de la paroi et donc le volume total utile de la benne 1.

De manière avantageuse, au moins certaines ouvertures servant de degrés pour monter ou descendre, présentent une arête inférieure recouverte d'une protection 14 ; il s'agit préférentiellement des ouvertures situées dans la moitié supérieure de la hauteur de la benne, de manière à prévenir les blessures des mains de l'utilisateur sur ces arêtes coupantes.
Comme cela est représenté sur la figure 1, des échelles intégrées selon l'invention peuvent être ménagées dans les parois latérales 2 ou frontales 4, en vis-à-vis de chacun des renforts verticaux 8 situés aux quatre coins de la benne 1.

Lorsque la benne est du type dans laquelle l'extrémité arrière de déchargement de la benne 1 est fermée au moyen de deux portes 5 ouvrant à la française, articulées par l'intermédiaire de charnières 21 sur des montants 20 d'encadrement du plan de l'ouverture de déchargement de la benne, ces portes 5 sont maintenues en position fermée par l'intermédiaire d'un dispositif de fermeture de type crémone, la crémone 25 étant logée au moins partiellement dans l'épaisseur du panneau constitutif de l'une des portes. Cette crémone 25 est constituée d'au moins une tige tournante entraînée en déplacement angulaire par l'intermédiaire de la poignée de manoeuvre formant avec la tige une équerre, cette tige disposée dans l'épaisseur de l'un des panneaux de portes étant munie à l'une de ses extrémités dite supérieure d'un crochet de verrouillage (non représenté) destiné à coopérer avec une lumière ménagée dans l'autre porte et à son autre extrémité, dite inférieure, par un pêne destiné à coopérer avec une gâche ménagée sur la partie de façade de la benne contre laquelle la poignée vient en applique.
La crémone 25 est manoeuvrée à l'aide d'une poignée de manoeuvre 22 s'étendant sous les portes 5. Cette poignée passe d'une position sous une première porte à une position sous la deuxième porte lors des opérations d'ouverture ou respectivement de fermeture des portes, cette poignée affectant la forme d'un bras 22 dont l'extrémité est, selon la présente invention, immobilisée en position de fermeture par un dispositif de verrouillage coulissant sur ladite extrémité et actionnable manuellement par un opérateur placé le long d'une des parois latérales 2 de la caisse de la benne 1 ou actionnable automatiquement lors de la vidange de la benne.

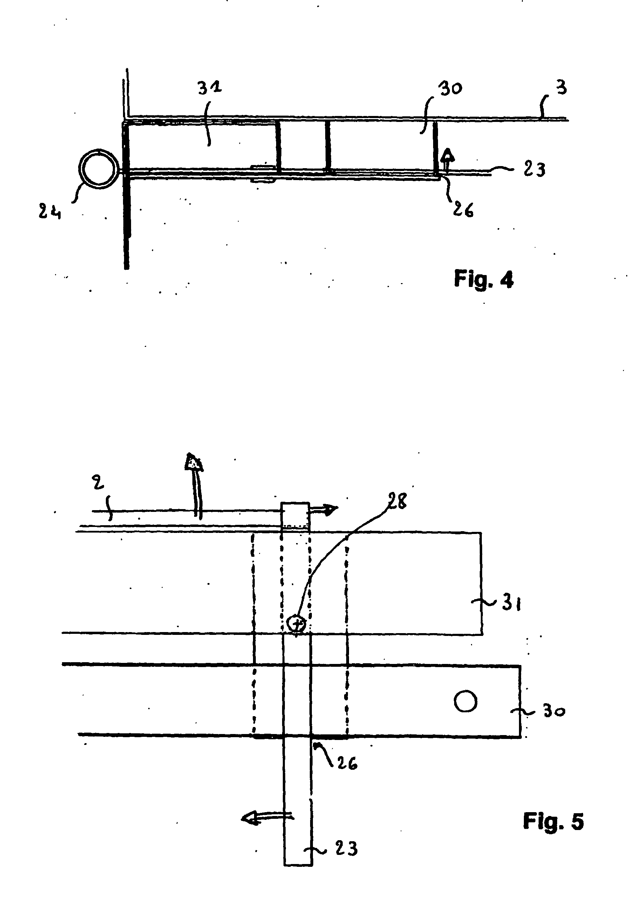

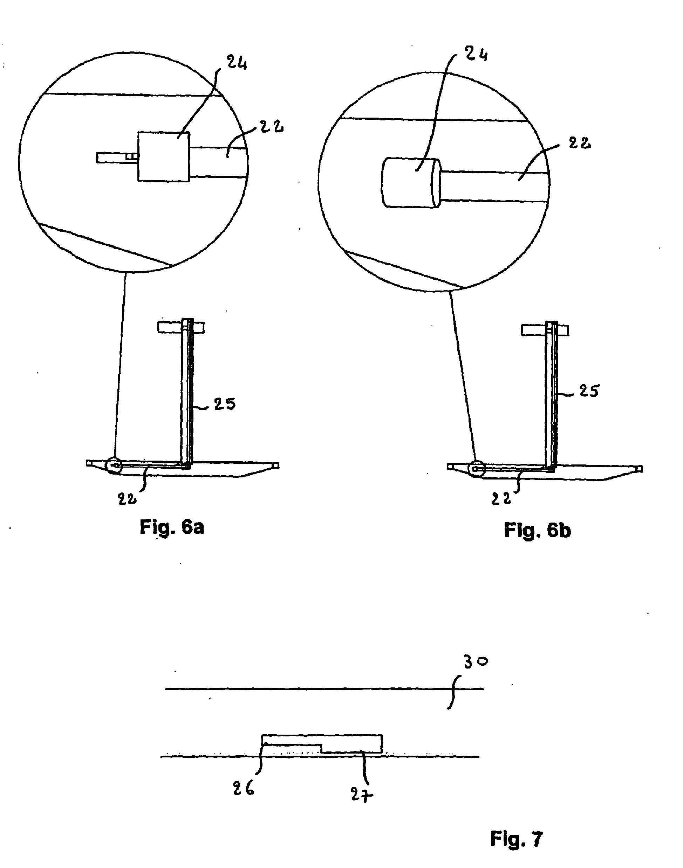

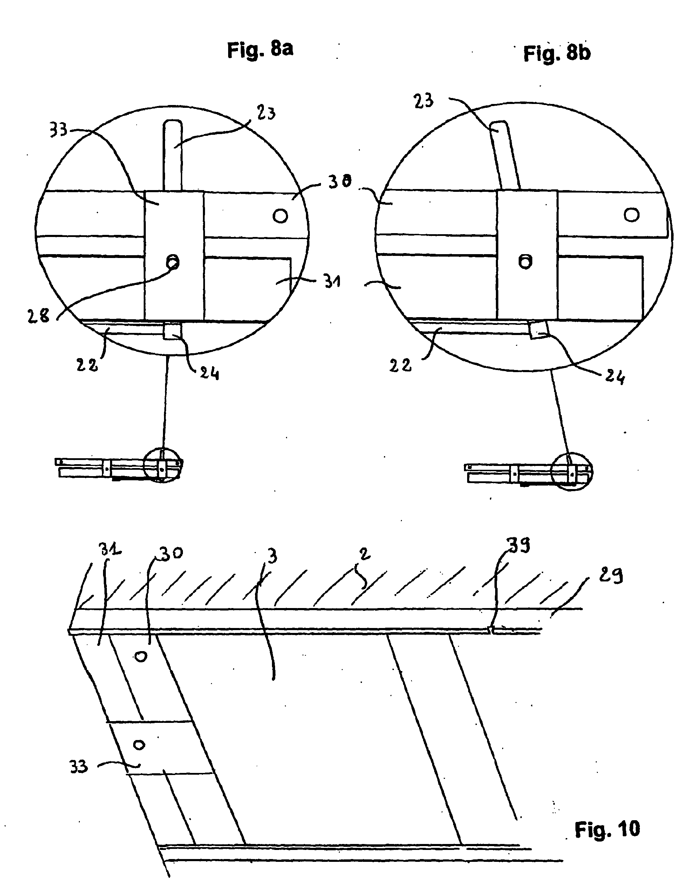

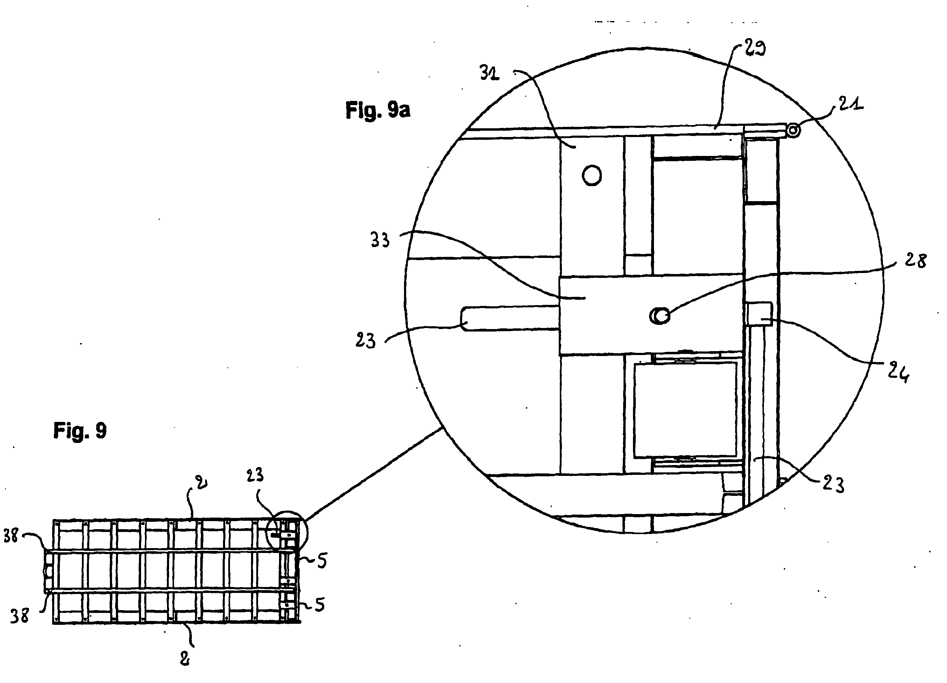

A cet effet, selon une première variante présentée sur les figures 4, 5, 6a, 6b, 7, 8a, 8b, 9 et 9a, le dispositif de fermeture et de verrouillage comprend un levier 23 passant au travers de lumières ménagées en alignement dans les traverses inférieures 30, 31 disposées sous le fond de la benne, une extrémité dudit levier 23 étant munie d'une partie annulaire 24 coulissant sur l'extrémité du bras 22 formant poignée de manoeuvre de la crémone, afin d'assurer son verrouillage. Ainsi, ce dispositif de verrouillage permet à la fois de maintenir fermées les portes 5 et un verrouillage de sécurité de celles-ci.
Le levier 23 est un levier pivotant, à axe vertical 28, mobile en outre axialement lors du passage de la position verrouillée à la position déverrouillée et inversement. Par exemple, la lumière 26, représentée à la figure 7, distale de la partie annulaire 24 présente un décrochement 27 vertical permettant de recevoir le levier 23 en position de verrouillage du bras 22 formant la poignée de manoeuvre de la crémone 25.
L'axe vertical 28 autour duquel le levier 23 pivote est, avantageusement, logé dans un orifice de forme oblongue ménagé soit dans le support 33 du dispositif de verrouillage (voir les figures 8a et 8b) ou dans le levier 23 lui-même, ce qui permet à l'axe de se déplacer de quelques millimètres dans le cas d'un choc violent en direction de l'arrière de la benne sur la poignée de la crémone. Le bras 22 peut ainsi se déplacer vers l'arrière ce qui le protège de toute déformation ou torsion lors du choc.
Comme montré sur la figure 9, le dispositif de fermeture et de verrouillage du bras 22 est situé dans un coin arrière gauche de la benne, sous le fond de cette benne, de manière à être facilement accessible et actionnable manuellement par un opérateur placé le long d'une des parois latérales 2.

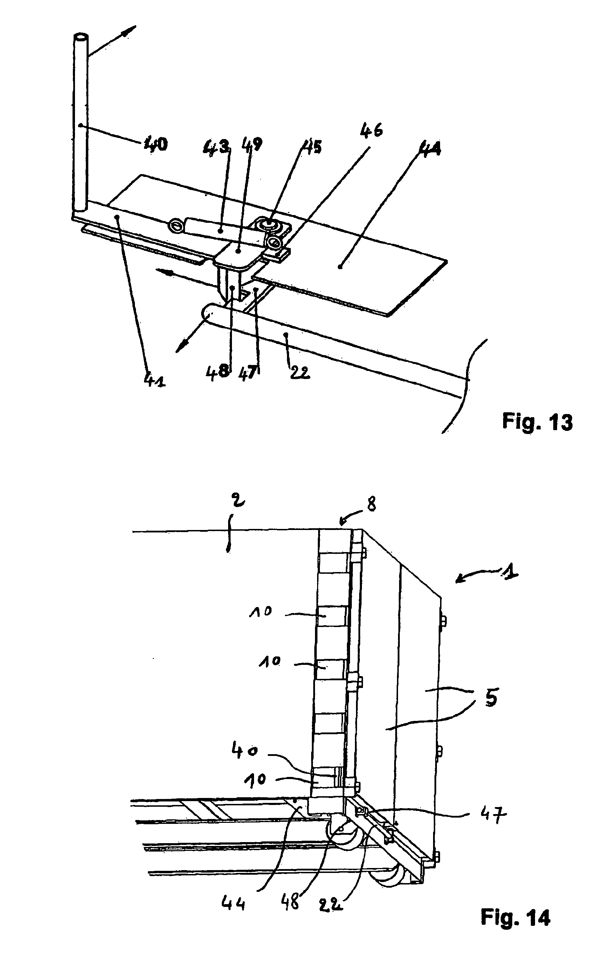

Selon une deuxième variante représentée sur la figure 13, le dispositif de fermeture et de verrouillage du bras 22 peut comprendre une poignée 40 accessible à travers une des ouvertures 10 ménagées dans une paroi latérale 2 de la benne 1 en regard d'un renfort, tel qu'un renfort vertical 8 disposé au voisinage d'un angle de la benne. Dans l'exemple présenté à la figure 13, l'organe de commande 41 affecte la forme d'un levier coudé pivotant dont l'une des branches forme une poignée 40, ici verticale, accessible au travers d'une ouverture 10 tandis que l'autre branche, représentée en 49 sur cette figure 13, est couplée à pivotement à une platine 44 s'étendant sous le fond de la benne 1. Cette branche 49 agit, au cours du déplacement angulaire du levier monté à pivotement autour d'un axe 45, sur l'organe 48 de verrouillage qui libère l'extrémité 47 du bras 22 de manoeuvre de la crémone. L'organe 41 de commande est en outre chargé par un ressort 43 qui s'étend entre la platine 44 et l'organe 41 de commande. Ce ressort rappelle l'organe 41 de commande dans une position verrouillée des portes. Le déplacement à pivotement de cet organe 41 s'opère à l'encontre de l'action du ressort qui rappelle l'organe 41 de commande dans une position limitée par une butée 46 de fin de course portée par la platine 44.

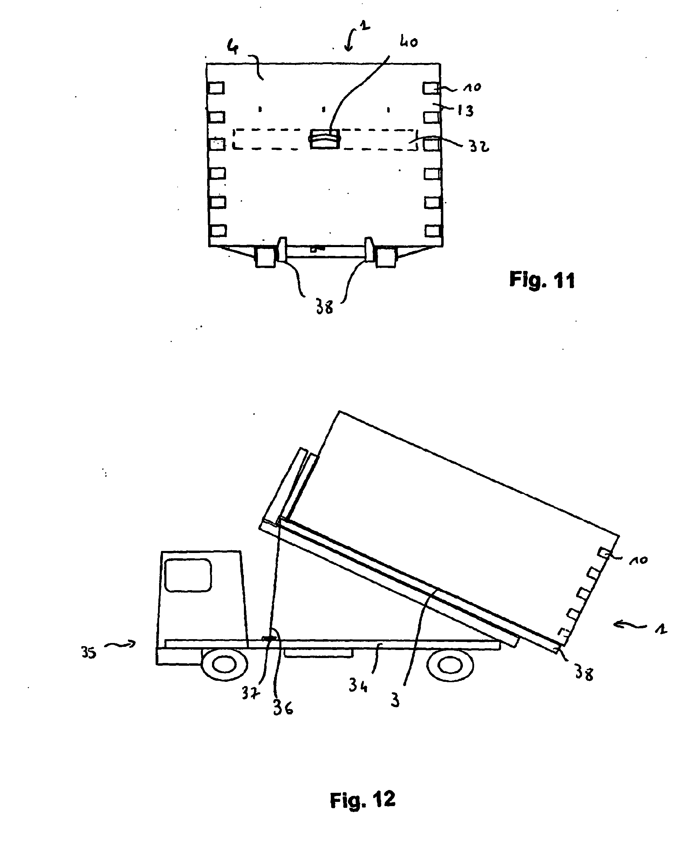

Selon une troisième variante, le dispositif de fermeture et de verrouillage peut être actionnable automatiquement lors du vidage de la benne. Dans ce cas, comme représenté à la figure 12, il est par exemple relié à un câble 36 passant sous le fond 3 de la benne jusqu'à l'avant de cette benne et fixé de manière non permanente au châssis 34 du véhicule 35. Ce câble 36 peut, par exemple, être fixé au châssis 34 par l'intermédiaire d'un aimant 37, qui peut se désolidariser dudit châssis 34, pour une certaine inclinaison prédéfinie de la benne.

Comme représenté sur la figure 11, la paroi frontale 4 de la caisse de la benne comporte un anneau de préhension 40 relié à un renfort disposé sur la paroi intérieure, sans jambage entre ledit anneau et les berces 38 de la benne, de manière à augmenter les surfaces d'affichage de cette paroi frontale.
Dans cet aménagement, l'anneau de préhension est solidaire par exemple d'une traverse de renfort 32 (représentée en pointillés) disposée, de préférence, horizontalement sur la face interne de la paroi avant 4, laissant ainsi libre la face externe.

Enfin, une encoche 39, ménagée dans un bandeau 29 s'étendant autour de la face formant le fond de la benne 1 sert de moyen d'accrochage permettant de maintenir les deux portes arrière 5 en position ouverte à l'état rabattu contre les parois latérales 2 de la benne sans que ce moyen d'accrochage ne dépasse de la largeur totale de sa benne.
Une telle encoche est apte à recevoir par exemple les anneaux d'une courte chaîne solidarisée à l'arête inférieure de ladite porte 5, lorsque celle-ci est rabattue contre une face latérale 2 externe de la benne.
Tous les aménagements décrits dans la présente demande sont intégrés à la benne, en permettant à celle-ci de ne pas dépasser la largeur totale admise actuellement, et en optimisant ainsi son volume utile.

## Revendications

1. Benne (1), de préférence amovible, pour le stockage et le transport de matériaux, du type comprenant une caisse délimitée par des parois latérales (2) et un fond (3), et fermée à une extrémité par une paroi frontale (4) avant, les parois latérales (2) de la benne présentant des renforts (6, 8) s'étendant dans le sens longitudinal et/ou transversal des parois de la benne (1), ces renforts étant profilés pour être solidarisés aux faces intérieures des parois de la benne pour former des caissons de raidissage laissant totalement libres les faces externes des parois latérales (2) aptes à constituer, notamment, des surfaces d'affichage,
**caractérisée en ce qu**'au moins une échelle est ménagée dans le plan, ou en retrait du plan extérieur d'au moins une paroi de la benne, ladite échelle étant formée d'une succession d'ouvertures (10) alignées verticalement, de préférence régulièrement espacées et ménagées dans au moins une paroi de la benne (1), en vis-à-vis d'une ou plusieurs zones en creux d'un renfort vertical (8) profilé solidarisé à la face intérieure de ladite paroi.

2. Benne (1) selon la revendication 1,
**caractérisée en ce que** le renfort (8) est un profilé creux ouvert, à section présentant la forme approximative d'un C ou d'un U dont les extrémités des branches sont solidarisées à la face intérieure de la paroi.

3. Benne (1) selon la revendication 1 ou 2,
**caractérisée en ce qu**'au moins certaines des ouvertures (10) servant de degré pour monter ou descendre, présentent une arête inférieure recouverte d'une protection (14).

4. Benne (1) selon les revendications 1 à 3,
**caractérisée en ce qu**'une échelle est ménagée dans les parois latérales (2) ou frontales (4) en vis-à-vis de chacun des renforts (8) situés aux quatre coins de la benne.

5. Benne (1) selon l'une quelconque des revendications précédentes,
du type dans laquelle l'extrémité arrière de déchargement de la benne est fermée au moyen de deux portes (5) ouvrant à la française, lesdites portes articulées sur des montants (20) équipant la caisse, étant maintenues en position fermée par l'intermédiaire d'un dispositif de fermeture de type crémone,
**caractérisée en ce que** la crémone (25) est logée au moins partiellement dans l'épaisseur du panneau constitutif de l'une des portes (5), et est manoeuvrée à l'aide d'une poignée de manoeuvre s'étendant sous les portes, cette poignée affectant la forme d'un bras (22) dont l'extrémité est immobilisée en position de fermeture par un dispositif de verrouillage coulissant sur ladite extrémité, ce dispositif de verrouillage étant soit actionnable manuellement par un opérateur placé le long d'une des parois latérales (2) de la caisse de la benne soit actionnable automatiquement lors du vidage de la benne.

6. Benne (1) selon la revendication 5,
**caractérisée en ce que** le dispositif de verrouillage comprend un levier (23) passant au travers de lumières ménagées en alignement dans les traverses inférieures (30, 31) disposées sous le fond (3) de la benne, une extrémité dudit levier étant munie d'une partie annulaire (24) coulissant sur l'extrémité du bras (22) formant poignée de manoeuvre de la crémone (25), afin d'assurer son verrouillage.

7. Benne (1) selon la revendication 5,
**caractérisée en ce que** le dispositif de verrouillage comprend une poignée (40) accessible à travers une des ouvertures (10) ménagées dans une paroi latérale (2) de la benne en regard d'un renfort, tel qu'un renfort vertical (8) disposé au voisinage d'un angle de la benne.

8. Benne (1) selon l'une quelconque des revendications précédentes,
**caractérisée en ce que** la paroi frontale (4) avant de la caisse de la benne comporte un anneau de préhension relié à un renfort disposé sur la paroi intérieure, sans jambage entre ledit anneau et les berces de la benne, de manière à augmenter les surfaces d'affichage de la face avant.

9. Benne (1) selon la revendication 5 du type comportant un moyen d'accrochage permettant de maintenir les deux portes arrière (5) en position ouverte à l'état rabattu contre les parois latérales (2) de la benne,
**caractérisée en ce que** ce moyen d'accrochage est disposé dans un bandeau (29) s'étendant autour de la face formant le fond (3) de la benne (1).

10. Benne (1) selon la revendication 9,
**caractérisée en ce que** le moyen d'accrochage est une encoche (39) ménagée dans ledit bandeau.

## Claims

1. Container (1), which is preferably removable, for storage and transport of materials, of the type comprising a case delimited by lateral walls (2) and a base (3), and which is closed at one end by a front frontal wall (4), the lateral walls (2) of the container having reinforcements (6, 8) which extend in the longitudinal and/or transverse direction of the walls of the container (1), these reinforcements being profiled such that they are integral with the inner surfaces of the walls of the container, in order to form strengthening girders which leave completely free the outer surfaces of the lateral walls (2), which in particular can constitute display surfaces, **characterised in that** at least one ladder is provided on the plane of, or recessed from the outer plane of, at least one wall of the container, the said ladder being formed by a succession of openings (10) which are aligned vertically, are preferably regularly spaced, and are provided in at least one wall of the container (1), opposite one or a plurality of recessed areas of a profiled vertical reinforcement (8) which is rendered integral with the inner surface of the said wall.

2. Container (1) according to claim 1, **characterised in that** the reinforcement (8) is an open hollow profile with a cross-section approximately in the shape of a "C" or a "U", the ends of the branches of which are rendered integral with the inner surface of the wall.

3. Container (1) according to claim 1 or claim 2, **characterised in that** at least some of the openings (10) which act as steps for climbing up or down have a lower ridge which is covered with a protection device (14).

4. Container (1) according to claims 1 to 3, **characterised in that** a ladder is provided in the lateral (2) or frontal walls (4) opposite each of the reinforcements (8) which are situated at the four corners of the container.

5. Container (1) according to any one of the preceding claims, of the type in which the rear unloading end of the container is closed by means of two doors (5) which open in the French manner, the said doors, which are articulated on uprights (20) with which the case is equipped, being maintained in the closed position by means of a closure device of the lock bolt type, **characterised in that** the lock bolt (25) is accommodated at least partially in the thickness of the panel which constitutes one of the doors (5), and is manoeuvred by means of a manoeuvring handle which extends beneath the doors, this handle being in the form of an arm (22), the end of which is immobilised in the closure position by a locking device which slides on the said end, this locking device being able to be actuated either manually by an operator positioned along one of the lateral walls (2) of the case of the container, or automatically during emptying of the container.

6. Container (1) according to claim 5, **characterised in that** the locking device comprises a lever (23) which passes through apertures which are provided aligned in the lower cross-members (30, 31) disposed beneath the base (3) of the container, one end of the said lever being provided with an annular part (24) which slides on the end of the arm (22) which forms a handle for manoeuvring of the lock bolt (25), in order to assure locking of the latter.

7. Container (1) according to claim 5, **characterised in that** the locking device comprises a handle (40) which is accessible through one of the openings (10) provided in a lateral wall (2) of the container, opposite a reinforcement, such as a vertical reinforcement (8) disposed in the vicinity of a corner of the container.

8. Container (1) according to any one of the preceding claims, **characterised in that** the front frontal wall (4) of the case of the container comprises a gripping ring which is connected to a reinforcement disposed on the inner wall, without a jamb between the said ring and the cradle of the container, such as to increase the displace surfaces of the front surfaces.

9. Container (1) according to claim 5, of the type comprising a hooking means to make it possible to maintain the two rear doors (5) in the open position, in the state in which they are folded back against the lateral walls (2) of the container, **characterised in that** this hooking means is disposed in a band (29) which extends around the surface which forms the base (3) of the container (1).

10. Container (1) according to claim 9, **characterised in that** the hooking means is a notch (39) which is provided in the said band.

## Patentansprüche

1. Vorzugweise beweglicher Wechselbehälter (1) zur Aufnahme und zum Transport von Materialien, der einen Kasten aufweist, der von Seitenwandungen (2) und einem Boden (3) begrenzt und an einem Ende von einer vorderen Wandung (4) geschlossen ist, wobei die Seitenwandungen (2) des Wechselbehälters Verstärkungen (6, 8) aufweisen, die sich in Längsrichtung und/oder Querrichtung der Wandungen des Wechselbehälters (1) erstrecken, wobei die Verstärkungen profiliert sind, um mit den Innenseiten der Wandungen des Wechselbehälters fest verbunden zu werden, um Versteifungskassetten zu bilden, wobei die Außenseiten der Seitenwandungen (2), die insbesondere Sichtflächen bilden können, völlig frei gelassen sind,
**dadurch gekennzeichnet, dass** an der Außenfläche oder eingelassen in die Außenfläche wenigstens einer Wandung des Wechselbehälters eine Leiter angebracht ist, wobei die Leiter von einer Aufeinanderfolge von Öffnungen (10) gebildet wird, die vertikal ausgerichtet und vorzugsweise in regelmäßigen Abständen und in wenigstens einer Wandung des Wechselbehälters (1) gegenüber einem oder mehreren hohlen Bereichen einer vertikalen Profilverstärkung (8) ausgebildet sind, die mit der Innenseite der Wandung fest verbunden ist.

2. Wechselbehälter (1) nach Anspruch 1, **dadurch gekennzeichnet, dass** die Verstärkung (8) ein offenes Hohlprofil ist, dessen Querschnitt annähernd eine C-Form oder U-Form hat und dessen Schenkelenden mit der Innenseite der Wandung fest verbunden sind.

3. Wechselbehälter (1) nach Anspruch 1 oder 2, **dadurch gekennzeichnet, dass** wenigstens einige der Öffnungen (10), die als Stufen zum Hinauf- oder Hinuntersteigen vorgesehen sind, eine untere Kante aufweist, die mit einem Schutz (14) belegt ist.

4. Wechselbehälter (1) nach den Ansprüchen 1 bis 3, **dadurch gekennzeichnet, dass** an den Seitenwandungen (2) oder an der vorderen Wandung(4) gegenüber jeder der an den vier Ecken des Wechselbehälters angebrachten Verstärkungen (8) eine Leiter angebracht ist.

5. Wechselbehälter (1) nach einem der vorhergehenden Ansprüche, bei dem das hintere Ende zum Entladen des Wechselbehälters durch zwei Drehtüren (5) geschlossen ist, wobei die Türen, die an Ständern (20), aus denen der Kasten besteht, gelenkig befestigt sind, von einer Vorrichtung nach Art eines Stangenriegels in geschlossener Stellung gehalten sind, **dadurch gekennzeichnet, dass** der Stangenriegel (25) wenigstens teilweise in der Tiefe der Platte sitzt, die eine der Türen (5) bildet, und mit einem sich unter den Türen erstreckenden Betätigungsgriff betätigt wird, wobei der Griff die Form eines Armes (22) hat, dessen Ende in geschlossener Stellung mit einer auf dem Ende gleitenden Verriegelungsvorrichtung festgestellt wird, wobei die Verriegelungsvorrichtung entweder von einem an einer der Seitenwandungen (2) des Kastens des Wechselbehälters stehenden Bediener von Hand betätigt oder beim Leeren des Wechselbehälters automatisch betätigt werden kann.

6. Wechselbehälter (1) nach Anspruch 5, **dadurch gekennzeichnet, dass** die Verriegelungsvorrichtung einen Hebel (23) umfasst, der durch Löcher verläuft, die fluchtend in den unteren Querstreben (30, 31) angebracht sind, die unter dem Boden (3) des Wechselbehälters angeordnet sind, wobei ein Ende des Hebels mit einem ringförmigen Teil (24) versehen ist, der auf dem Ende des Armes (22) gleitet, der den Betätigungsgriff des Stangenriegels (25) bildet, um seine Verriegelung sicherzustellen.

7. Wechselbehälter (1) nach Anspruch 5, **dadurch gekennzeichnet, dass** die Verriegelungsvorrichtung einen Griff (49) umfasst, der durch eine der Öffnungen (10) zugänglich ist, die in einer Seitenwand (2) des Wechselbehälters gegenüber einer Verstärkung, beispielsweise einer in der Nähe einer Ecke des Wechselbehälters angeordneten vertikalen Verstärkung (8) angebracht sind.

8. Wechselbehälter (1) nach einem der vorhergehenden Ansprüche, **dadurch gekennzeichnet, dass** die vordere Wandung (4) des Kastens des Wechselbehälters einen Greifring umfässt, der mit einer an der Innenwandung angeordneten Verstärkung ohne Stütze zwischen dem Ring und dem Unterbau des Wechselbehälters verbunden ist, um die Sichtflächen der Vorderseite zu vergrößern.

9. Wechselbehälter (1) nach Anspruch 5 mit einem Feststellmittel, das es ermöglicht, die beiden Hintertüren (5) im abgesenkten Zustand in geöffneter Stellung an den Seitenwandungen (2) des Wechselbehälters festzuhalten, **dadurch gekennzeichnet, dass** das Feststellmittel in einer Leiste (29) angeordnet ist, die um die Fläche verläuft, die den Boden (3) des Wechselbehälters (1) bildet.

10. Wechselbehälter (1) nach Anspruch 9, **dadurch gekennzeichnet, dass** das Feststellmittel eine in der Leiste ausgebildete Nut (39) ist.
